Europäisches Patentamt

European Patent Office

Office européen des brevets

(11) Veröffentlichungsnummer: **0 218 966**
**A2**

## (12) EUROPÄISCHE PATENTANMELDUNG

(21) Anmeldenummer: 86113213.2

(22) Anmeldetag: 25.09.86

(51) Int. Cl.⁴: **H 04 L 7/00**

(30) Priorität: 18.10.85 DE 3537105

(43) Veröffentlichungstag der Anmeldung:
22.04.87 Patentblatt 87/17

(84) Benannte Vertragsstaaten:
AT BE CH DE FR GB IT LI LU NL SE

(71) Anmelder: **ROBERT BOSCH GMBH**
**Postfach 50**
**D-7000 Stuttgart 1(DE)**

(72) Erfinder: **Ketterling, Hans-Peter, Dipl.-Ing.**
**Manfred-von-Richthofen-Strasse 11**
**D-1000 Berlin 42(DE)**

(74) Vertreter: **Schmidt, Hans-Ekhardt**
**Robert Bosch GmbH Geschäftsbereich Elektronik Patent-**
**und Lizenzabteilung Forckenbeckstrasse 9-13**
**D-1000 Berlin 33(DE)**

(54) Nachrichtenübertragungsverfahren.

(57) Es wird ein Nachrichtenübertragungsverfahren vorgeschlagen, das nach dem Zeitmultiplexprinzip oder einem kombinierten Frequenzmultiplex-/Zeitmultiplexprinzip arbeitet. Um eine einwandfreie Synchronisierung bei der Übertragung zu erhalten, wird jeder unbelegte Zeitschlitz (S2u) bzw. jeder unbelegte Übertragungskanal mit einem Füllsignal (F2) belegt. Dabei muß das Füllsignal eine geringere Übertragungsbandbreite ($\Delta f_2$) aufweisen als die maximale Übertragungsbandbreite ($\Delta f_1$) eines belegten Zeitschlitzes (S1b) bzw. Übertragungskanals. Das Übertragungsverfahren eignet sich besonders für ein TDMA- bzw. FD/TDMA-Funktelefonnetz, welches in Funkzellen mit je einer Basisfunkstation aufgeteilt ist und in welchem mobile Funkstationen verkehren.

Fig. 1

EP 0 218 966 A2

47/85
EK/PLI Scht-Li
16.10.1985


ROBERT BOSCH GMBH, 7000 Stuttgart 1


Nachrichtenübertragungsverfahren


## Stand der Technik

Die Erfindung geht von einem Nachrichtenübertragungsverfahren nach der Gattung des Anspruchs 1 aus.

Es ist ein in Funkzellen aufgeteiltes Funktelefonnetz bekannt (Funkschau, 1985, Heft 1, Seiten 47 bis 50), bei dem unbelegte Zeitschlitze oder unbelegte Sprachkanäle zu Schwierigkeiten oder zu einem höheren Aufwand bei der Synchronisierung der Funkübertragung führen.


## Vorteile der Erfindung

Das erfindungsgemäße Nachrichtenübertragungsverfahren mit den kennzeichnenden Merkmalen des Anspruchs 1 hat den Vorteil, daß aus den übertragenen Signalen auch bei zum Teil nicht durch Nutzsignale belegten Zeitschlitzen bzw. Übertragungskanälen dauernd Synchronsignale abgeleitet werden können, so daß eine einwandfreie Synchronisierung mit verhältnismäßig geringem Aufwand gewährleistet werden kann.

Als besonders vorteilhaft hat es sich erwiesen, wenn die Füllsignale Leertelegramme, vorzugsweise aus PRN(pseudo-random-noise)-Folgen bestehen. Derartige Signale benötigen eine verhältnismäßig geringe Bandbreite, so daß Störungen von Nutzsignalen maximaler Bandbreite durch die in den unbelegten Zeitschlitzen bzw. Übertragungskanälen zu übertragenden Füllsignale nur in geringem Maße zu erwarten sind.

...

<u>Zeichnung</u>

Ein Ausführungsbeispiel der Erfindung ist in der Zeichnung an Hand mehrerer Figuren dargestellt und in der nachfolgenden Beschreibung näher erläutert. Die Zeichnung zeigt in

Fig. 1 einen in Zeitschlitze aufgeteilten Zeitrahmen,

Fig. 2 ein Modulationsleistungsdichte-Spektrum eines Füllsignals mit maximaler Bandbreite $\Delta f_1$ und

Fig. 3 ein Modulationsleistungsdichte-Spektrum eines erfindungsgemäßen Füllsignals mit verhältnismäßig kleiner Bandbreite $\Delta f_2$.

<u>Beschreibung der Erfindung</u>

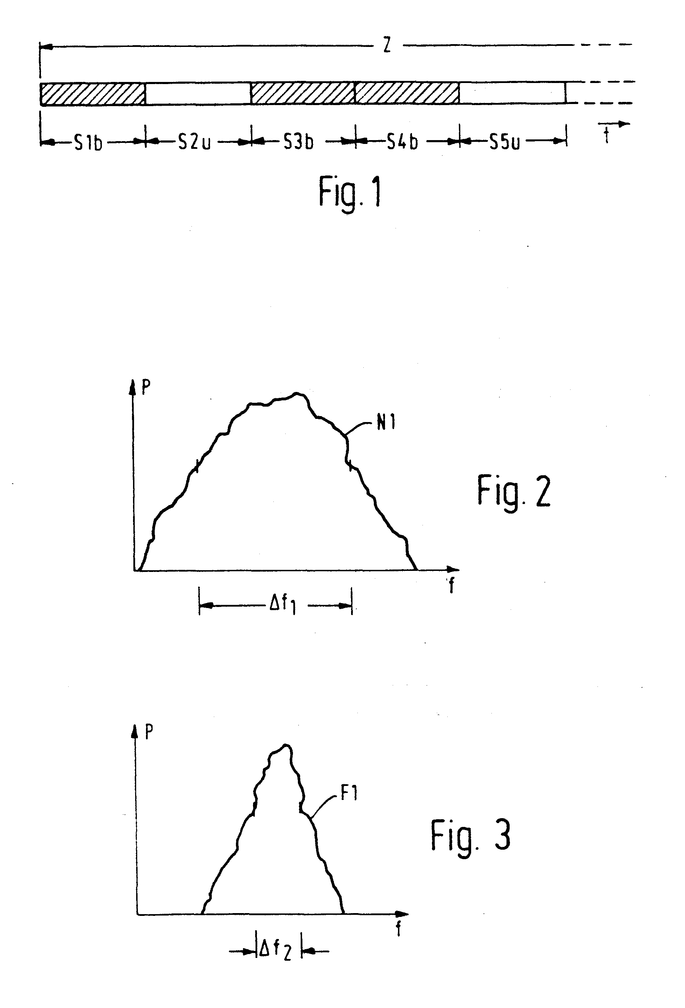

In Fig. 1 bezeichnet Z einen Zeitrahmen für ein Zeitmultiplex(TDMA)-Funktelefonsystem. Der Zeitrahmen umfaßt eine Vielzahl von Zeitschlitzen S1, S2 ..., von denen zum Beispiel der erste, dritte und vierte Zeitschlitz belegt sind (S1b, S3b, S4b) und der zweite und fünfte Zeitschlitz unbelegt sind (S2u, S5u). In den jeweils unbelegten Zeitschlitzen werden in der Übertragungsrichtung von einer einer Funkzelle zugeordneten Basisfunkstation zu einer im Bereich der Funkzellen verkehrenden mobilen Funkstation Füllsignale übertragen, um die aus dem Signalinhalt belegter Zeitschlitze abgeleitete Synchronisation zu verbessern. Das Einfügen von Füllsignalen in die jeweils unbelegten Zeitschlitze, zum Beispiel S2u und S5u, muß jedoch so erfolgen, daß dadurch keine zusätzlichen Störungen bei der Übertragung verursacht werden. Beispielsweise würde ein in Fig. 2 gezeigtes Nutzsignal N1, das eine maximale Bandbreite $\Delta f_1$ aufweist und in einem ersten Zeitschlitz, zum Beispiel S1b, übertragen wird, in Verbindung mit einem Füllsignal etwa gleich großer Bandbreite, das in einem benachbarten Zeitschlitz, zum Beispiel S2u, übertragen wird, Störungen, zum Beispiel Nachbarkanalträgerstörungen, hervorrufen.

...

Eine störungsfreie Übertragung von normalen Telefonsignalen und Füllsignalen läßt sich jedoch erzielen, wenn, wie in Fig. 3 gezeigt, ein Füllsignal F1 verwendet wird, das eine im Verhältnis zu der maximalen Bandbreite $\Delta f_1$ geringe Bandbreite $\Delta f_2$ aufweist. Ein derartiges Füllsignal ist vorzugsweise ein Leertelegramm aus einer Folge von PRN-Signalen. Derartige Signale weisen eine verhältnismäßig geringe Übertragungsbandbreite auf, so daß die unvermeidbaren Störungen auf ein Minimum reduziert werden. An die Stelle der als Füllsignale verwendeten PRN-Signale können auch spektral ähnlich aufgebaute Informationen treten. Das als Ausführungsbeispiel beschriebene Funktelefonnetz kann mit gleichem Vorteil auch durch ein Glasfaser-Übertragungsnetz oder ein Drahtnetz ersetzt werden.

0218966

47/85
EK/PLI Scht-Li
16.10.1985

ROBERT BOSCH GMBH, 7000 Stuttgart 1

<u>Ansprüche</u>

1. Nachrichtenübertragungsverfahren nach dem Zeitmultiplexprinzip oder einem kombinierten Frequenzmultiplex-/Zeitmultiplexprinzip, dadurch gekennzeichnet, daß jeder
   unbelegte Zeitschlitz (S2u, S5u) bzw. jeder unbelegte
   Übertragungskanal mit einem Füllsignal (F2) belegt ist,
   der eine geringere Übertragungsbandbreite ($\Delta f_2$) aufweist
   als die maximal zulässige Übertragungsbandbreite ($\Delta f_1$)
   eines belegten Zeitschlitzes (S1b) bzw. Übertragungskanals.

2. Nachrichtenübertragungsverfahren nach Anspruch 1, dadurch
   gekennzeichnet, daß das Füllsignal (F2) ein Leertelegramm
   ist.

3. Nachrichtenübertragungsverfahren nach Anspruch 2, dadurch
   gekennzeichnet, daß das Leertelegramm aus einer Folge von
   PRN(pseudo-random-noise)-Signalen besteht.

4. Nachrichtenübertragungsverfahren nach Anspruch 1 oder einem
   der folgenden, dadurch gekennzeichnet, daß das Verfahren bei
   einem Funktelefonnetz angewendet wird.

Fig. 1

Fig. 2

Fig. 3